Europäisches Patentamt

European Patent Office

Office européen des brevets

(19)

(11) **EP 1 158 426 A1**

(12) **EUROPEAN PATENT APPLICATION**

(43) Date of publication:
**28.11.2001 Bulletin 2001/48**

(51) Int Cl.$^7$: **G06F 17/30**

(21) Application number: **01112555.6**

(22) Date of filing: **23.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.05.2000 US 580930**

(71) Applicant: **Bridgewell Incorporated Taipei (TW)**

(72) Inventors:
• **Chou, Pei-Lin**
  **Taipei, Taiwan, R.O.C. (TW)**

• **Oh-Yang, Yen-Cheng**
  **Hsi-Chi Town, Taipei Hsien, Taiwan,R.O.C (TW)**
• **Chen, Kuang Hwa**
  **Hsi-Chi Town, Taipei, Taiwan, R.O.C. (TW)**
• **Song, Tien Hsiung**
  **Taipei, Taiwan, R.O.C. (TW)**
• **Cheng, Chi Yuan**
  **Yuan Ho City, Taipei Hsien, Taiwan,R.O.C (TW)**

(74) Representative: **Casalonga, Axel et al**
  **BUREAU D.A. CASALONGA - JOSSE**
  **Morassistrasse 8**
  **80469 München (DE)**

(54) **A method for associating attributes to documents**

(57) Attributes are associated with a document. Attributes are generated for each phrase in a document. A weight is assigned to each of the attributes for a phrase. A sum of weights is calculated for each of the attributes. As a separate step or as part of weight being assigned to each of the attributes for a phrase, the sum of weights for each attribute may be adjusted to take into account a frequency each attribute occurs in other documents in the corpus.

FIGURE 4

Printed by Jouve, 75001 PARIS (FR)

**Description**

CROSS REFERENCE TO RELATED APPLICATION

This application is a continuation-in-part of application Serial No. 09/525,692, filed March 15, 2000.

BACKGROUND OF THE INVENTION

The present invention relates to databases and pertains particularly to assigning attributes to phrases to organize and access documents.

The collection and use of information is important both for individuals and corporate entities. This is particularly true for certain professions, such as news agencies and publishing companies. In these professions, the collection and management of data is essential.

In early data management systems, data was collected and preserved. Data, when needed, was searched out one article at a time. Such a traditional data management lacks structure, and is not sufficient for modern society which values efficiency and speed.

In more recent years, the use of computers has greatly increased the efficiency of data management. Data management by computer is generally divided into two systems. In one system, data is sorted by index. In the other system, data is sorted using multiple indexes similar to the use of a bibliographical card index.

When sorting by index, a subjective judgment of data is made according to the existing sorting criteria. Based on this subjective judgement, the data is indexed and stored into a corresponding file. When a particular lot of data is desired, a search is performed by index in an attempt to locate the appropriate data.

One drawback of a single index system is that sorting is done manually in reliance upon the subjective judgment of an administrator. Data supposed to be classified under a first category might be misplaced in a second category simply because the administrator failed to recognize the nature of the data. Since any lot of data is generally put under only one particular category only, the lot of data is practically missing if put under another category by mistake. Therefore, it is easy in a single index for data to become lost or difficult to retrieve.

In multiple index systems, multiple indexes are used. For example, separate columns can be used to allow sorting by author, log-in date, log-in publication, topic or serial number. The data can then be retrieved using an index for any column.

However there are also deficiencies with multiple index systems. For example, for any particular lot of data any and all specific columns can fail to satisfy the needs for organization of data. For instance, it may still be difficult to define and classify data used by a news agency or a publishing company. For example, if there are seven co-authors in a given article and the specific column used to index authors allows the entry of at most three authors, then only three of seven co-authors can be used to index the article. The remaining four authors would have to be abandoned in the entry. A later search for the works of these four authors would not turn up this article. Furthermore, the selection of which authors to include in the entry and which to drop requires a subjective judgment.

Key words can be used to index data. For example, to index a target article, keywords can be used such as "Politics", "Related to Crossing the Straits", or "Straits Exchange Foundation". These keywords can be stored with the document or the database system can perform a full text index through all documents in the database searching for a keyword. However, use of keywords for searching lacks accuracy since articles may contain searched key words, but the key words may have different meanings as used in different articles. Thus searching by key word is often not worth the effort.

SUMMARY OF THE INVENTION

In accordance with a preferred embodiment of the present invention, attributes are associated with a document. Attributes are generated for each phrase in a document. A weight is assigned to each of the attributes for a phrase. A sum of weights is calculated for each of the attributes.

In the preferred embodiment, experts familiar with subject matter within a corpus to which the document belongs are used to generate attributes for each phrase. Alternatively, these phrases may be generated statistically or by some other means.

Also, in the preferred embodiment, the equation below is used to calculate an attribute weight $W(t_k)$ for a phrase $t_k$ within the document:

$$W(t_k) = \sum_j CW(t_j, t_k)$$

where

$$d_{ij} = tf_{ij} \times \log(\frac{N}{df_j})$$

$$d_{ijk} = tf_{ijk} \times \log(\frac{N}{df_{jk}})$$

$$weight\ factor\ (t_k) = \log\frac{(N/df_k)}{\log(N)}$$

$$CW(t_j, t_k) = \frac{\sum_i d_{ijk}}{\sum_i d_{ij}} \times weight\ factor(t_k)$$

In the above equation, $N$ is a total number of the documents in a corpus that contains the document; $tf_{ij}$ is a total number of times a phrase j is used in a document i; $tf_{ijk}$ is a minimum of $tf_{ij}$ and $tf_{ik}$; $df_j$ is a total number of documents that the phrase j exists in; and, $df_{jk}$ is a total number of documents that the phrase j and a phrase k coexist in.

A summed weight $W_1$ for a first attribute when there are x different phrases in the document may be calculated using an equation below:

$$W_1 = \sum_1^x W(t_i)_1 \times N_i$$

In the equation above, $W(t_i)_1$ is a weight of the first attribute for a phrase $t_i$, and $N_i$ is the number of times that the phrase $t_i$ appears in the document.

As a separate step or as part of weight being assigned to each of the attributes for a phrase, the sum of weights for each attribute may be adjusted to take into account a frequency each attribute occurs in other documents in the corpus. When adjusting the sum of weights for each attribute $W(t_i)_1$ is replaced by $W(t_i)'_1$ so the summation $W_1$ is replaced by $W_1'$ accordingly. This is done, for example, using the equation below:

$$W(t_i)\ '_1 = W(t_i)_1 \times IDF(t_i)$$

where

$$IDF\ (t_i) = \log\ (\ N/DF\ (t_i))$$

In the equation above, $N$ is a total number of documents in the corpus; and, $DF\ (t_k)$ is a total number of documents in the corpus that contain the phrase $t_i$.

The present invention allows for associating attributes to a document is such a way that the contents of the document is accurately described by the attributes.

BRIEF DESCRIPTION OF THE DRAWINGS:

Figure 1 is a flowchart which illustrates a method for dividing sentences into phrases in accordance with a preferred embodiment of the present invention.

Figure 2 is a graph that shows a connectivity measure of words within a sentence in accordance with a preferred embodiment of the present invention.

Figure 3 is a flowchart which illustrates a method for assigning and weighting attributes in accordance with a preferred embodiment of the present invention. in accordance with a preferred embodiment of the present invention.

Figure 4 is a graph that shows relationships between attributes and phrases in accordance with a preferred embodiment of the present invention.

DETAILED DESCRIPTION OF THE INVENTION:

In the English language but particularly in the Chinese language, a single word is not always sufficient to carry a clear meaning. A word with a particular assigned meaning may have a totally different meaning when appearing with a different word. Therefore parsing sentences within a document into phrases with a basic meaning is necessary in order to understand the subject matter addressed by the document. This is useful, for example, when a system uses phrases to automatically assign attributes to a document. An attribute is, for example, a topic addressed within the document.

Thus, in some cases it is desirable to divide a document into phrases, so that a phrase can be used as a basic processing element.

For example, parsing into phrases can be performed using syntactic analysis. Each part of a sentence can be categorized as verb phrase, noun phrase, adjective phrase, adverbial phrase, proper name etc.

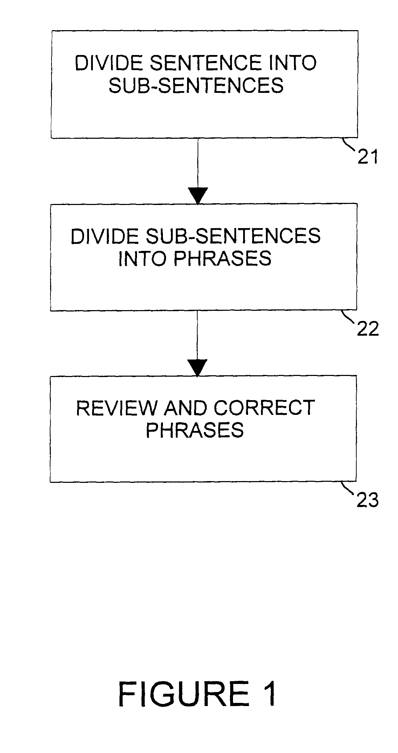

In the preferred embodiment of the present invention, however, parsing into phrases is done without the use of syntactic analysis. For example, Figure 1 sets out a method for performing phrasing of a sentence within a document.

In a step 21, the sentence is divided into sub-sentences. The division is done, however, not with syntactic analysis, but by using statistical processing to decide the breaking points between words (or characters) to make a long sentence become several short sentences, or sub-sentence. A long sentence may be divided into several sub-sentences. A short sentence, however, may be divided into only a single sub-sentence where the sub-sentence is the entire sentence.

For example, Table 1 below sets out a sentence in Chinese:

In Table 1 above, the original sentence, which is underlined, may be transliterated as, "This (time) semiconductor forum is by Minister of Economic Affairs information industry task group responsible for planning and holding"

As shown in Table 1, the sentence is shown broken into three sub-sentences. The first sub-sentence can be transliterated as: "this (time) semiconductor forum". The second sub-sentence can be transliterated as: "is by Minister of Economic Affairs information industry task group". The third sub-sentence can be transliterated as: "responsible for planning and holding".

In order to divide the sentence, a metric called cutability measure (CM) is used. CM represents the strength of disconnection between characters (or words). The concept is similar to use of a pause between certain words when speaking a long sentence. The proper location to pause between words is a high Cutability Measure point.

In the preferred embodiment, CM is defined as the sum of Backward Entropy, Forward Entropy and Mutual Information. Entropy is a metric to measure the degree of disorder in thermodynamics. When we observe the words (characters) patterns in a corpus, for each single word we can find different patterns following this word. We describe these patterns by Forward Entropy (FE). The higher Forward Entropy, the higher disorder of the patterns following the word.

For example, in Table 2 below two Chinese words (characters) are shown. Also shown are all the two character combinations that appear in the corpus that begin with one of the two words. The number in parenthesis indicates the number of times each of the word combinations appears in the corpus.

As shown in Table 2, there are five different combinations of characters which begin with word 1. There are only two different combinations of characters which begin with word 2. In this case, it is clear word 1 has higher Forward Entropy than word 2.

In general, forward entropy (FE) is defined by Equation 1 below:

$$FE(C_i) = -\sum_{C_j} P_F(C_j \mid C_i) \log P_F(C_j \mid C_i)$$

<u>Equation 1:</u>

In Equation 1 above, the probability of $C_j$ following $C_i$ is defined as:

$$P_F(C_j / C_i)$$

Similarly, the higher Backward Entropy, the higher disorder of the patterns ahead of a particular word. For example, in Table 3 below two Chinese words (characters) are shown. Also shown are all the two character combinations that appear in the corpus that end with one of the two words. The number in parenthesis indicates the number of times each of the word combinations appears in the corpus.

As shown in Table 3, there are five different combinations of characters which end with word 1. There are only two different combinations of characters that end with word 2. In this case, it is clear word 1 has higher Backward Entropy than word 2.

In general, backward entropy (FE) is defined by Equation 2 below:

$$BE(C_i) = -\sum_{C_j} P_B(C_j \mid C_i) \log P_B(C_j \mid C_i)$$

<u>Equation 2</u>

In Equation 2 above, the probability of $C_j$ ahead of $C_i$ is defined as:

$$P_B(C_j / C_i)$$

Mutual Information (MI) is a measurement of probability that two words appear in the exact pattern. MI ($C_i$, $C_j$) relates to the probability that $C_j$ exactly comes after $C_i$. The higher MI ($C_i$, $C_j$), the more probably $C_j$ exactly comes after $C_i$. Equation 3 below gives the exact definition for MI:

Equation 3

$$MI(C_i, C_j) = \log \frac{P(C_i C_j)}{P(C_i)P(C_j)}$$

In equation 3 above: $P(C_i C_j)$ means the probability that $C_j$ exactly comes after $C_i$; $P(C_i)$ is the probability that any character chosen at random in the corpus is $C_i$; and, $P(C_j)$ is the probability that any character chosen at random in the corpus is $C_j$.

Thus the Cutability Measure (CM) between two adjacent words $C_j$ and $C_i$ is defined as in Equation 4 below:

Equation 4

$$CM(C_i, C_j) = FE(C_i) + BE(C_j) - MI(C_i, C_j)$$

If there are N words in a sentence, there are N-1 Cutability Measures calculated. For example, for the sentence shown in Table 1, there are 24 words (characters). Thus there are 23 CM calculated between words.

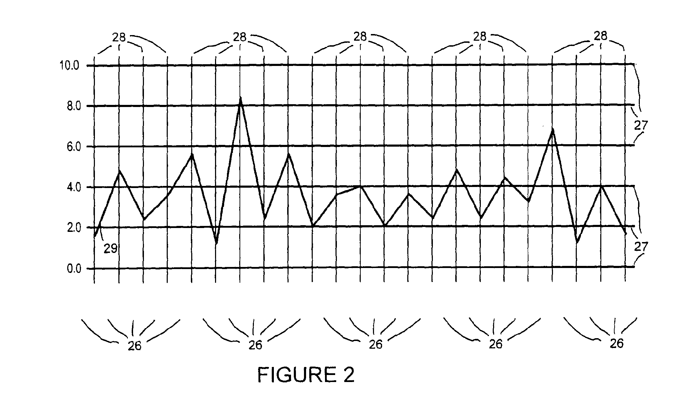

Figure 2 illustrates the CM for the 24 words shown in Table 1. In Figure 1, vertical lines 28 are the locations the cutability measure (CM) are measured for the words (characters) in columns 26. Graph 29 shows the cutability values between each word, as set out on horizontal lines 27.

Thus, as shown in Figure 2, the cutability measure between the first and second words is approximately 1.6. The cutability measure between the second and third words is approximately 4.8. The cutability measure between the third and fourth words is approximately 2.4. The cutability measure between the fourth and fifth words is approximately 3.6. The cutability measure between the fifth and sixth words is approximately 5.6. The cutability measure between the sixth and seventh words is approximately 1.3. The cutability measure between the seventh and eighth words is approximately 8.3. The cutability measure between the eighth and ninth words is approximately 2.3. The cutability measure between the ninth and tenth words is approximately 5.6. The cutability measure between the tenth and eleventh words is approximately 2.0. The cutability measure between the eleventh and twelfth words is approximately 3.7. The cutability measure between the twelfth and thirteenth words is approximately 4.0. The cutability measure between the thirteenth and fourteenth words is approximately 2.0. The cutability measure between the fourteenth and fifteenth words is approximately 3.6. The cutability measure between the fifteenth and sixteenth words is approximately 2.4. The cutability measure between the sixteenth and seventeenth words is approximately 4.7. The cutability measure between the seventeenth and eighteenth words is approximately 2.3. The cutability measure between the eighteenth and nineteenth words is approximately 4.2. The cutability measure between the nineteenth and twentieth words is approximately 3.2. The cutability measure between the twentieth and twenty-first words is approximately 6.4. The cutability measure between the twenty-first and twenty-second words is approximately 1.3. The cutability measure between the twenty-second and twenty third words is approximately 4.0. The cutability measure between the twenty-third and twenty-fourth words is approximately 1.7.

Based on the cutability measure, the sentence is divided into sub-sentences. The exact threshold used at which a sentence is divided can be varied in a way that best fits the particular application. The lower CM threshold, the more sub-sentences for each sentence. In the present example, a CM threshold of 6.0 is chosen resulting in the sentence division shown in Table 1.

In a step 22, the sub-sentences are divided into phrases. For example, in Chinese, most phrases are 2-word and 3-word patterns. However, sometimes a phrase may consist of four words, five words or even more words. Herein, a phrase is used interchangeably with the word 'term' to indicate one or more words that form a unit within a document.

In the preferred embodiment, statistical analysis is used to divide the words into phrases. For example, in order to divide a seven word sub-sentence into phrases, the statistical occurrence of word combinations within the corpus is used to determine the phrase breaks.

For words where there is less than a predetermined number of words separating the word from the end of the phrase, a "stop character" is added. Like a period or comma, the "stop character" indicates the end of the phrase.

In the present example, the first word occurs 22,484 times: 23 times immediately followed by the second word, four times followed by the second and third words, one time followed by the second, third and fourth words and one time followed by the second, third, fourth and fifth words. The second word occurs 1,778 times: 40 times immediately followed by the third word, twice followed by the third and fourth words, twice followed by the third, fourth and fifth words and one time followed by the third, fourth, fifth and sixth words. The third word occurs 4,483 times: 15 times immediately followed by the fourth word, 15 times followed by the fourth and fifth words, one time followed by the fourth, fifth and sixth words and one time followed by the fourth, fifth words, sixth and seventh words. The fourth word occurs 1,217 times: 515 times immediately followed by the fifth word, twice followed by the fifth and sixth word, twice followed by the fifth, sixth and seventh words and nine times followed by the fifth, sixth and seventh words at the end of the phrase (stop character) . The fifth word occurs 3,705 times: nine times immediately followed by the sixth word, nine times followed by the sixth and seventh words and 85 times followed by the sixth and seventh words at the end of the phrase (stop character). The sixth word occurs 1,991 times: 1367 times immediately followed by the seventh word and 232 times immediately followed by the seventh word at the end of the phrase (stop character) . The seventh word appears 3,216 times and 647 times at the end of the phrase (stop character). This information is summarized in Table 4 below:

Table 4

| Word 1 | Word 2 | Word 3 | Word 4 | Word 5 | Word 6 | Word 7 |
|--------|--------|--------|--------|--------|--------|--------|
| 22,484 | 2,778 | 4,483 | 1,217 | 3,705 | 1,991 | 3,216 |
| 23 | 40 | 15 | 515 | 9 | 1,367 | 647 |
| 4 | 2 | 15 | 2 | 9 | 232 | |
| 1 | 2 | 1 | 2 | 3 | | |

Table 4   (continued)

| Word 1 | Word 2 | Word 3 | Word 4 | Word 5 | Word 6 | Word 7 |
|--------|--------|--------|--------|--------|--------|--------|
| 1 | 1 | 1 | 1 | | | |

From Table 4, it can be seen that the sub-sentence is likely to be divided into four phrases: word 1, word 2-3, word 4-5, word 6-7. For example, the combination of words 2 and 3 is used 40 times, while the combination of words 2, 3 and 4 is used only 2 times, and the combination of words 3 and 4 is used only 15 times. Therefore the use of words 2 and 3 as a phrase is probably better than the use of the word combination of words 3 and 4 or word combination of words 2, 3 and 4.

Similarly, the word combination of words 4 and 5 is used 515 times, while the word combination of words 4, 5 and 6 is used only 2 times and the word combination of words 5 and 6 is used only nine times. It is clear from this that the word combination of words 4 and 5 is a phrase.

In the preferred embodiment, a design rule is used to automate this phase of phrasing. Starting from the beginning of a sub-sentence, for every adjacent word combination, the n-word combinations of the two words are compared. Specifically, the ratio of the n-word combinations for the two words are calculated, and the n-word combination with the highest ratio is selected as a phrase.

For example, for word 1 and word 2 the ratio of the n-word combinations are calculated as in Table 5 below:

Table 5

| | Word 1 | Word 2 | Word 1/word 2 |
|--|--------|--------|---------------|
| 1-word combination | 22,484 | 2,778 | 22,484/2778 = 12.6 |
| 2-word combination | 23 | 40 | 23/40 = 0.5 |
| 3-word combination | 4 | 2 | 4/2 = 2.0 |
| 4-word combination | 1 | 2 | 1/2 = .05 |
| 5-word combination | 1 | 1 | 1/1 = 1 |

From Table 5, it is clear that the highest ratio is 12.6 which is for a one-word combination. Therefore, word 1 is used as a one-word phrase.

For word 2 and word 3 the ratio of the n-word combinations are calculated as in Table 6 below:

Table 6

| | Word 2 | Word 3 | Word 1/word 2 |
|--|--------|--------|---------------|
| 1-word combination | 2,778 | 4,483 | 2778/4,483 = 0.4 |
| 2-word combination | 40 | 15 | 40/15 =2.7 |
| 3-word combination | 2 | 15 | 2/15 = 0.1 |
| 4-word combination | 2 | 1 | 2/1 = 2.0 |
| 5-word combination | 1 | 1 | 1/1 = 1 |

From Table 6, it is clear that the highest ratio is 2.7 which is for a two-word combination. Therefore, word 2 and word 3 are used as a two-word phrase.

For word 4 and word 5 the ratio of the n-word combinations are calculated as in Table 7 below:

Table 7

| | Word 4 | Word 5 | Word 1/word 2 |
|--|--------|--------|---------------|
| 1-word combination | 1,217 | 3,705 | 1,217/3,705 = 0.3 |
| 2-word combination | 515 | 9 | 515/9 = 57 |
| 3-word combination | 2 | 9 | 2/9 = 0.2 |
| 4-word combination | 2 | 3 | 2/3 = 0.7 |

Table 7   (continued)

|  | Word 4 | Word 5 | Word 1/word 2 |
|---|---|---|---|
| 5-word combination |  |  | ... |

From Table 7, it is clear that the highest ratio is 57 which is for a two-word combination. Therefore, word 4 and word 5 are used as a two-word phrase.

For word 6 and word 7 the ratio of the n-word combinations are calculated as in Table 8 below:

Table 8

|  | Word 6 | Word 7 | Word 1/word 2 |
|---|---|---|---|
| 1-word combination | 1,991 | 3,216 | 1,991/3,216 = 0.6 |
| 2-word combination | 1,367 | 647 | 1367/647 = 2.1 |
| 3-word combination |  |  | ... |
| 4-word combination |  |  | ... |
| 5-word combination |  |  | ... |

From Table 8, it is clear that the highest ratio is 2.1 which is for a two-word combination.

So far, parsing into phrases has been performed without using syntactic analysis. The parsing into phrases is dependent solely on the frequency of occurrence of the phrases. This is particularly effective when properly parsing proper names in Chinese. Proper names are difficult to find using syntactic analysis and they are not all listed in a dictionary.

As long as a proper name is used with sufficient frequency in the literature, it is likely that the proper name will be correctly identified as a phrase using the above-described analysis.

Step 21 and step 22 can be completely automated and performed by a computer. In a step 23, the phrases are reviewed and corrected by a human operator. The human operator performs a final check and correction of the phrases.

Once phrase are parsed within a document, these phrases can be sued to associate attributes to the document. Documents can then be categorized and searched based on these attributes.

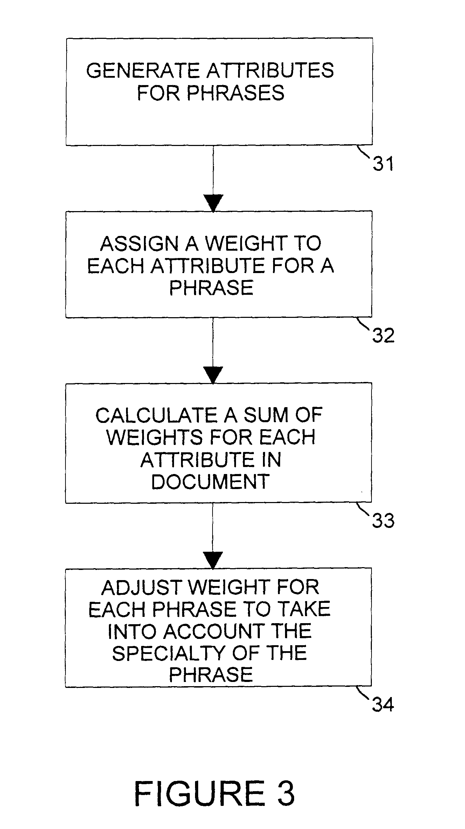

Figure 3 is a flowchart which illustrates a method for associating attributes to a document. In a step 31, attributes for each phrase are generated. What is meant by an attribute is a topic that is associated with a phrase. For example, for the phrase "ambulance" attributes such as "emergency", "car", "accident", "patient", and "rescue" could be generated.

In the preferred embodiment, attributes are assigned to phrases by experts familiar with the corpus.

In a step 32, the attributes generated for each phrase are assigned weights. This is done, for example, based on statistical occurrence or some other methodology.

For example, when assigning weights to attributes of a phrase, it is for the purpose of indicating which attributes are more related or meaningful to a phrase. The weight assigned to each attribute of a phrase indicates the level of relatedness between an attribute and a phrase.

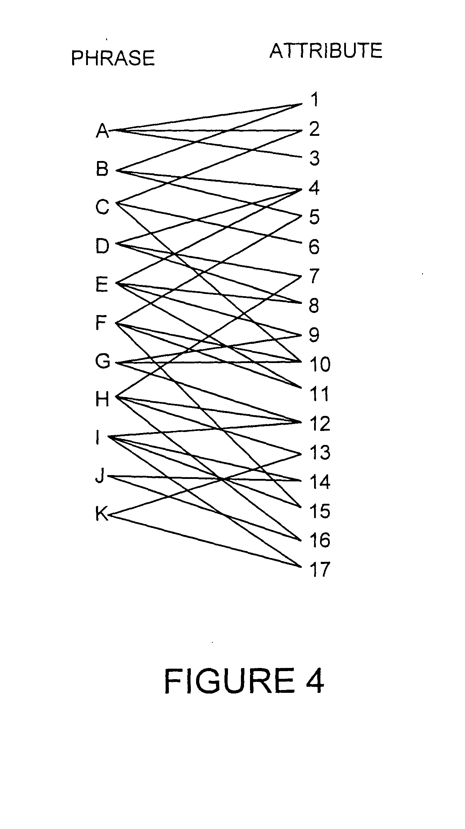

Each phrase typically has many a number of attributes. Similarly, each attribute is typically an attribute for more than one phrase. This is illustrated by Figure 4 where it is shown how a list of phrases A, B, C, D, E, F, G, H, I, J and K is related to a list of attributes 1 through 17.

In the preferred embodiment, a list of attributes is stored for each phrase. Likewise a list of phrases is stored for each attribute.

For each attribute and a list of phrases for the attribute, $W(t_k)$ is the calculated weighting factor of $t_k$ to A, where $t_k$ is one phrase of the list. This is illustrated by Equation 5 below.

Equation 5

$$W(t_k) = \sum_j CW(t_j, t_k)$$

where

$$CW(t_j, t_k) = \frac{\sum_i d_{yk}}{\sum_i d_{ij}} \times weight\ factor(t_k)$$

$$d_{ij} = tf_{ij} \times \log\left(\frac{N}{df_j}\right)$$

$$d_{ijk} = tf_{ijk} \times \log\left(\frac{N}{df_{jk}}\right)$$

$$weight\ factor\ (t_k) = \frac{\log(N/df_k)}{\log(N)}$$

In equation 5, $N$ is the total number of the documents in the corpus. Also, in equation 5 and the following discussion, a "phrase" is also called a "term". Thus, "phrase" and "term" are used interchangeably.

In equation 5, $tf_{ij}$ is phrase (term) frequency, which means the total number of times the phrase (term) j is used in the document i. The higher $tf_{ij}$, the more important and indicative the phrase (term) j is for the document i.

In equation 5, $tf_{ijk}$ is the minimum of $tf_{ij}$ and $tf_{ik}$. This is an indication of the number of times term j and term k coexist in document i. The higher $tf_{ijk}$ the more times term j and term k coexists in document i, and the more term j and term k are related in document i.

In equation 5, $df_j$ is document frequency. This means the total number of documents that term j exists in. The higher $df_j$, the more popular term j is in documents.

In equation 5, $df_{jk}$ is document frequency. This means the total number of documents that term j and term k coexist in. The higher $df_{jk}$, the more frequently term j and term k coexist in documents.

Using Equation 5 for each attribute in a document, it is possible to get the weighting $W(t_k)$ of phrase (term) k against each attribute. A subscript n is added to each weighting term $W(t_k)$ to indicate which attribute is being referred to. Thus for an Attribute n, the weighting term is written as $W(t_k)n$.

In a Table 9 below, weighting terms are stored for a document which has a total of y attributes and x associated phrases (terms).

Table 9

| Sequence | 1 | 2 | 3 | 4 | | X |
|---|---|---|---|---|---|---|
| | Term A | Term B | Term C | Term D | | Term K |
| Attribute 1 | $W(t_a)_1$ | $W(t_b)_1$ | $W(t_c)_1$ | $W(t_d)_1$ | | $W(t_k)_1$ |
| Attribute 2 | $W(t_a)_2$ | $W(t_b)_2$ | $W(t_c)_2$ | $W(t_d)_2$ | | $W(t_k)_2$ |
| Attribute 3 | $W(t_a)_3$ | $W(t_b)_3$ | $W(t_c)_3$ | $W(t_d)_3$ | | $W(t_k)_3$ |
| Attribute 4 | $W(t_a)_4$ | $W(t_b)_4$ | $W(t_c)_4$ | $W(t_d)_4$ | | $W(t_k)_4$ |
| | | | | | | |
| Attribute y | $W(t_a)_y$ | $W(t_b)_y$ | $W(t_c)_y$ | $W(t_d)_y$ | | $W(t_k)_y$ |

In building Table 9, the concept of document frequency and term frequency has been used to determine the weighting relationship between attributes and phrases quantitatively. The information in Table 9 is very helpful in interpreting attributes by phrases or, vice versa, phrases by attributes. Additionally, Table 9 can be sorted so that attributes for each phrase can be listed by weight, or so that phrases associated by each attribute can be listed by weight.

In a step 33, a sum of weights for each attribute is calculated. This is done by summing contributions of weight that each phrase in a document makes to an attribute. The result of summation is treated as the weight of attribute for the document.

This is a straightforward calculation as illustrated by equation 6 below:

$$\underline{Equation\ 6}$$

$$W_1 = \sum_1^x W(t_i)_1 \times N_i$$

In Equation 6, $W_1$ is the summed weight for a first attribute (attribute 1) when there are x number of different phrases in a document. $W(t_i)_1$ is the weight each occurrence of a phrase $t_i$ contributes to the first attribute (attribute 1). $N_i$ is the number of times that phrase $t_i$ appears in the document. The use of $N_i$ is intended to emphasize the importance of a phrase (term), if the phrase is used repeatedly.

For a document having x terms and having y total attributes associated with the x terms, Table 10 represents summation information for all the attributes. For a specific document, there are y attributes and y summation weights ($W_1$ to $W_y$) correspondingly. Of course, some of the attribute weights for each phrase are zero, which is the minimum weight. This indicates that a phrase is not associated with a particular attribute. When the summed weight of an attribute has a zero sum for the entire document, this indicates the attribute has absolute nothing to do with this document.

Table 10

| Seq. | 1 | 2 | 3 | 4 | ... | X | |
|---|---|---|---|---|---|---|---|
| | Term A | Term B | Term C | Term D | ... | Term K | Sum |
| Attr . 1 | $W(t_a)_1 \times N_a$ | $W(t_b)_1 \times N_b$ | $W(t_c)_1 \times N_c$ | $W(t_d)_1 \times N_d$ | ... | $W(t_k)_1 \times N_k$ | $W_1$ |
| Attr . 2 | $W(t_a)_2 \times N_a$ | $W(t_b)_2 \times N_b$ | $W(t_c)_2 \times N_c$ | $W(t_d)_2 \times N_d$ | ... | $W(t_k)_2 \times N_k$ | $W_2$ |
| Attr . 3 | $W(t_a)_3 \times N_a$ | $W(t_b)_3 \times N_b$ | $W(t_c)_3 \times N_c$ | $W(t_d)_3 \times N_d$ | ... | $W(t_k)_3 \times N_k$ | $W_3$ |
| Attr . 4 | $W(t_a)_4 \times N_a$ | $W(t_b)_4 \times N_b$ | $W(t_c)_4 \times N_c$ | $W(t_d)_4 \times N_d$ | ... | $W(t_k)_4 \times N_k$ | $W_4$ |
| ... | ... | ... | ... | ... | ... | ... | ... |
| Attr . y | $W(t_a)_y \times N_a$ | $W(t_b)_y \times N_b$ | $W(t_c)_y \times N_c$ | $W(t_d)_y \times N_d$ | ... | $W(t_k)_y \times N_k$ | $W_y$ |

In a step 34, the weight of each attribute is adjusted to take into account the specialty of the phrase. In an alternative embodiment, step 34 can also be performed as part of step 33. The resulting updated weights produce more accurate results in some circumstance. Table 11 shows the values in Table 10 updated to reflect the specialty of the phrase.

Table 11

| Seq. | 1 | 2 | 3 | 4 | ... | X | |
|---|---|---|---|---|---|---|---|
| | Term A | Term B | Term C | Term D | ... | Term K | Sum |
| Attr . 1 | $W(t_a)'_1 \times N_a$ | $W(t_b)'_1 \times N_b$ | $W(t_c)'_1 \times N_c$ | $W(t_d)'_1 \times N_d$ | ... | $W(t_k)'_1 \times N_k$ | $W_1'$ |
| Attr . 2 | $W(t_a)'_2 \times N_a$ | $W(t_b)'_2 \times N_b$ | $W(t_c)'_2 \times N_c$ | $W(t_d)'_2 \times N_d$ | ... | $W(t_k)'_2 \times N_k$ | $W_2'$ |
| Attr . 3 | $W(t_a)'_3 \times N_a$ | $W(t_b)'_3 \times N_b$ | $W(t_c)'_3 \times N_c$ | $W(t_d)'_3 \times N_d$ | ... | $W(t_k)'_3 \times N_k$ | $W_3'$ |
| Attr . 4 | $W(t_a)'_4 \times N_a$ | $W(t_b)'_4 \times N_b$ | $W(t_c)'_4 \times N_c$ | $W(t_d)'_4 \times N_d$ | ... | $W(t_k)'_4 \times N_k$ | $W_4'$ |
| ... | ... | ... | ... | ... | ... | ... | ... |
| Attr . y | $W(t_a)'_y \times N_a$ | $W(t_b)'_y \times N_b$ | $W(t_c)'_y \times N_c$ | $W(t_d)'_y \times N_d$ | ... | $W(t_k)'_y \times N_k$ | $W_y'$ |

In Table 11, original $W(t_k)_y$ is replaced by $W(t_k)'_y$. So the summation $W_y$ is replaced by $W_y'$ accordingly. Equation 7 below shows the relationship between $W(t_k)_y$ is replaced by $W(t_k)'_y$.

$$\underline{Equation\ 7}$$

$$W(t_k)'_y = W(t_k)_y \times IDF(t_k)$$

In Equation 7, $IDF(t_k)$ is the Inverse Document Frequency that indicate the specialty of phrase $t_k$. $IDF(t_k)$ is calculated as set out in Equation 8 below:

<u>Equation 8</u>

$$IDF(t_k) = log(N/DF(t_k))$$

In Equation 8, $N$ is the total number of documents in the corpus. $DF(t_k)$ is the total number of documents that contain the phrase $t_k$.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

**Claims**

1. A method for associating attributes to a document, comprising the following steps:

   (a) generating attributes for each phrase in a document;
   (b) assigning a weight to each of the attributes for a phrase; and,
   (c) calculating a sum of weights for each of the attributes.

2. A method as in claim 1 wherein step (a) is performed by experts familiar with subject matter within a corpus to which the document belongs.

3. A method as in claim 1 wherein in step (b) the equation below is used to calculate an attribute weight $W(t_k)$ for a phrase $t_k$ within the document:

$$W(t_k) = \sum_j CW(t_j, t_k)$$

where

$$d_{ij} = tf_{ij} \times log(\frac{N}{df_j})$$

$$d_{ijk} = tf_{ijk} \times log(\frac{N}{df_{jk}})$$

$$weight\ factor\ (t_k) = \frac{log(N/df_k)}{log(N)}$$

$$CW(t_j, t_k) = \frac{\sum_i d_{ijk}}{\sum_i d_{ij}} \times weight\ factor(t_k)$$

and where,

N is a total number of the documents in a corpus that contains the document;
$tf_{ij}$ is a total number of times a phrase j is used in a document i;
$tf_{ijk}$ is a minimum of $tf_{ij}$ and $tf_{ik}$;
$df_j$ is a total number of documents that the phrase j exists in; and,
$df_{jk}$ is a total number of documents that the phrase j and a phrase k coexist in.

4. A method as in claim 3 wherein in step (c), the equation below is used to calculate a summed weight $W_1$ for a first attribute when there are x different phrases in the document:

$$W_1 = \sum_1^x W(t_i)_1 \times N_i$$

where

$W(t_i)_1$ is a weight of the first attribute for a phrase $t_i$, and
$N_i$ is the number of times that the phrase $t_i$ appears in the document.

5. A method as in claim 4 additionally comprising the following step:
(d) adjusting the sum of weights for each attribute to take into account a frequency each attribute occurs in other documents in the corpus.

6. A method as in claim 5, wherein in step (d) when adjusting the sum of weights for each attribute $W(t_i)_1$ is replaced by $W(t_i)'_1$ so the summation $W_1$ is replaced by $W_1'$ accordingly,
where:

$$W(t_i)\ '_1 = W(t_i)_1\ x\ IDF(t_i)$$

$$IDF\ (t_i) = log\ (\ N/DF\ (t_i))$$

$N$ is a total number of documents in the corpus; and,

$DF\ (t_k)$ is a total number of documents in the corpus that contain the phrase $t_i$.

7. A method as in claim 3 additionally comprising the following step:
(d) adjusting the sum of weights for each attribute to take into account a frequency each attribute occurs in other documents in the corpus.

8. A method as in claim 7, wherein in step (d) when adjusting the sum of weights for each attribute $W(t_i)_1$ is replaced by $W(t_i)'_1$,
where:

$$W(t_i)\ '_1 = W(t_i)_1\ x\ IDF(t_i)$$

$$IDF\ (t_i) = log\ (\ N/DF\ (t_i))$$

$N$ is a total number of documents in the corpus; and,
$DF\ (t_k)$ is a total number of documents in the corpus that contain the phrase $t_i$.

**9.** A method as in claim 3 wherein step (b) includes the following substep:
    (b.1) adjusting the sum of weights for each attribute to take into account a frequency each attribute occurs in other documents in the corpus.

**10.** A method as in claim 9, wherein in substep (b.1) when adjusting the sum of weights for each attribute $W(t_i)_1$ is replaced by $W(t_i)'_1$,
where:

$$W(t_i)'_1 = W(t_i)_1\ x\ IDF(t_i)$$

$$IDF\ (t_i) = log\ (\ N/DF\ (t_i))$$

$N$ is a total number of documents in the corpus; and,
$DF\ (t_k)$ is a total number of documents in the corpus that contain the phrase $t_i$.

**11.** A method as in claim 1 additionally comprising the following step:
    (d) adjusting the sum of weights for each attribute to take into account a frequency each attribute occurs in other documents in the corpus.

**12.** A method as in claim 1 wherein in step (c), the equation below is used to calculate a summed weight $W_1$ for a first attribute when there are x different phrases in the document:

$$W_1 = \sum_1^x W(t_i)_1 \times N_i$$

where

$W(t_i)_1$ is a weight of the first attribute for a phrase $t_i$, and
$N_i$ is the number of times that the phrase $t_i$ appears in the document.

**13.** A method as in claim 1 wherein step (b) comprises the following substep:
    (b.1) adjusting the sum of weights for each attribute to take into account a frequency each attribute occurs in other documents in the corpus.

**14.** Storage media that stores a program, which when executed, performs a method for associating attributes to a document when attributes for each phrase in a document have been generated, the method comprising the following steps:

    (a) assigning a weight to each of the attributes for a phrase; and,
    (b) calculating a sum of weights for each of the attributes.

**15.** Storage media as in claim 1 wherein in step (a) the equation below is used to calculate an attribute weight $W(t_k)$ for a phrase $t_k$ within the document:

$$W(t_k) = \sum_j CW(t_j, t_k)$$

where

$$CW(t_j, t_k) = \frac{\sum_i d_{ijk}}{\sum_i d_{ij}} \times weight\, factor(t_k)$$

$$d_{ij} = tf_{ij} \times \log\left(\frac{N}{df_j}\right)$$

$$d_{ijk} = tf_{ijk} \times \log\left(\frac{N}{df_{jk}}\right)$$

$$weight\, factor\, (t_k) = \frac{\log\,(N/df_k)}{\log\,(N)}$$

and where,

$N$ is a total number of the documents in a corpus that contains the document;
$tf_{ij}$ is a total number of times a phrase j is used in a document i;
$tf_{ijk}$ is a minimum of $tf_{ij}$ and $tf_{ik}$;
$df_j$ is a total number of documents that the phrase j exists in; and,
$df_{jk}$ is a total number of documents that the phrase j and a phrase k coexist in.

16. Storage media as in claim 15 wherein in step (b) , the equation below is used to calculate a summed weight $W_1$ for a first attribute when there are x different phrases in the document:

$$W_1 = \sum_1^x W(t_i)_1 \times N_i$$

where

$W(t_i)_1$ is a weight of the first attribute for a phrase $t_i$, and
$N_i$ is the number of times that the phrase $t_i$ appears in the document.

17. Storage media as in claim 16 wherein the method additionally comprises the following step:
(c) adjusting the sum of weights for each attribute to take into account a frequency each attribute occurs in other documents in the corpus, wherein i when adjusting the sum of weights for each attribute $W(t_i)_1$ is replaced by $W(t_i)'_1$ so the summation $W_1$ is replaced by $W_1'$ accordingly,
where:

$$W(t_i)'_1 = W(t_i)_1 \times IDF(t_i)$$

$$IDF\ (t_i) = log\ (\ N/DF\ (t_i))$$

$N$ is a total number of documents in the corpus; and,
$DF\ (t_k)$ is a total number of documents in the corpus that contain the phrase $t_i$.

**18.** Storage media as in claim 16 wherein step (a) includes the following substep:
(a.1) adjusting the sum of weights for each attribute to take into account a frequency each attribute occurs in other documents in the corpus, wherein i when adjusting the sum of weights for each attribute $W(t_i)_1$ is replaced by $W(t_i)'_1$ so the summation $W_1$ is replaced by $W_1'$ accordingly,
where:

$$W(t_i)'_1 = W(t_i)_1\ x\ IDF(t_i)$$

$$IDF\ (t_i) = log\ (\ N/DF\ (t_i))$$

$N$ is a total number of documents in the corpus; and,
$DF\ (t_k)$ is a total number of documents in the corpus that contain the phrase $t_i$.

**19.** Storage media as in claim 14 wherein step (b) includes the following substep:
(b.1) adjusting the sum of weights for each attribute to take into account a frequency each attribute occurs in other documents in the corpus.

**20.** Storage media as in claim 14, wherein the method additionally comprises the following step:
(c) adjusting the sum of weights for each attribute to take into account a frequency each attribute occurs in other documents in the corpus.

DIVIDE SENTENCE INTO
SUB-SENTENCES

21

DIVIDE SUB-SENTENCES
INTO PHRASES

22

REVIEW AND CORRECT
PHRASES

23

# FIGURE 1

FIGURE 2

GENERATE ATTRIBUTES
FOR PHRASES

31

ASSIGN A WEIGHT TO
EACH ATTRIBUTE FOR A
PHRASE

32

CALCULATE A SUM OF
WEIGHTS FOR EACH
ATTRIBUTE IN
DOCUMENT

33

ADJUST WEIGHT FOR
EACH PHRASE TO TAKE
INTO ACCOUNT THE
SPECIALTY OF THE
PHRASE

34

# FIGURE 3

PHRASE          ATTRIBUTE

FIGURE 4

**European Patent Office**

## EUROPEAN SEARCH REPORT

Application Number

EP 01 11 2555

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 774 888 A (LIGHT JOHN) 30 June 1998 (1998-06-30) * column 2, line 41 - column 3, line 4 * * column 5, line 44 - column 7, line 29; figure 2 * --- | 1,14 | G06F17/30 |
| A | US 5 873 056 A (LIDDY ELIZABETH D ET AL) 16 February 1999 (1999-02-16) * column 5, line 2 - line 62; figure 1 * * abstract * --- | 1,14 | |
| A | US 5 953 718 A (WICAL KELLY) 14 September 1999 (1999-09-14) * column 2, line 11 - line 32 * * column 4, line 40 - column 7, line 48; figure 1 * ----- | 1,14 | |
| | | | TECHNICAL FIELDS SEARCHED (Int.Cl.7) G06C G06F |

The present search report has been drawn up for all claims

| Place of search | Date of completion of the search | Examiner |
|---|---|---|
| BERLIN | 26 September 2001 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 11 2555

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2001

| Patent document cited in search report | | Publication date | Patent family member(s) | Publication date |
|---|---|---|---|---|
| US 5774888 | A | 30-06-1998 | NONE | |
| US 5873056 | A | 16-02-1999 | NONE | |
| US 5953718 | A | 14-09-1999 | NONE | |

EPO FORM P0459

For more details about this annex : see Official Journal of the European Patent Office, No. 12/82